# EUROPEAN PATENT SPECIFICATION

(11) **EP 4 217 248 B1**
(45) Date of publication and mention of the grant of the patent: **27.08.2025**
(21) Application number: 21782943.1
(22) Date of filing: 22.09.2021
(51) Int. Cl.: B60W 30/18, B60K 6/48, B60K 6/547, B60W 20/10, B60W 10/06, B60W 10/08, B60W 10/26, B60W 10/188, B60W 30/182, B60W 50/00

(54) **CREEP TORQUE CONTROL SYSTEM FOR A VEHICLE**
KRIECHDREHMOMENTSTEUERUNGSSYSTEM FÜR EIN FAHRZEUG
SYSTÈME DE COMMANDE DE COUPLE DE RAMPAGE POUR UN VÉHICULE

(30) Priority: 23.09.2020 GB 202015025
(43) Date of publication of application: 02.08.2023
(73) Proprietor: Jaguar Land Rover Limited, Coventry, Warwickshire CV3 4LF (GB)
(72) Inventor: HIPKIN, Orrin, Coventry Warwickshire CV3 4lf (GB)
(74) Representative: Jaguar Land Rover Patents Department
(86) International application number: PCT/EP2021/076121
(87) International publication number: WO 2022/063860

(56) References cited:
- EP-A2- 1 342 607
- US-A1- 2020 130 452

## Description

### TECHNICAL FIELD

The present disclosure relates to a control system for controlling creep torque in a vehicle dependent on a terrain mode. Aspects of the invention relate to a vehicle, a method and to a non-transitory computer readable medium.

### BACKGROUND

Automatic transmissions are frequently used in road vehicles and sports utility vehicles (SUVs). The automatic transmission often contains a torque converter to allow launch from rest. A benefit of the torque converter is that a facility known as "creep" is available - when drive is selected in the automatic transmission and the brakes are released, a small drive torque is produced at the road wheels accelerating the vehicle to a creep speed of around 4kph, even without accelerator input by the driver. In a vehicle with an internal combustion engine (ICE), this creep speed is a function of the engine idle speed, the torque converter characteristic, the gear ratio selected, the gradient, and the surface resistance.

Because the torque converter is not controlled to provide creep, the driver experiences variation of creep speed when driving on gradients or on irregular or soft surfaces. Also, the general characteristic of a torque converter is for maximum torque to be generated when moving away from rest and this may exceed the available surface friction on a low friction surface such as wet grass or ice.

EP1342607A2 describes a method and system for controlling creep in an automatic transmission.

US2020/130452A1 describes an electronic controller for a motor vehicle, the controller configured to determine when at least one wheel has lost traction.

It is an aim of the present invention to address one or more of the disadvantages associated with the known art.

### SUMMARY OF THE INVENTION

Aspects and embodiments of the invention provide a control system, a method, a vehicle and a non-transitory computer readable medium as claimed in the appended claims.

According to an aspect of the present invention there is provided a control system for a vehicle, the control system comprising one or more controllers, the control system configured to:
determine a terrain mode of the vehicle;
select a relationship between torque and speed based, at least in part, on the terrain mode; and
when the vehicle is operating in a creep control mode, control a drive torque of the vehicle in accordance with the selected relationship between torque and speed,
wherein the speed of the vehicle (100) is controlled to a target speed while maintaining drive torque at or below the selected relationship between torque and speed.

The controllers may collectively comprise:
at least one electronic processor having an electrical input for receiving signals; and
at least one electronic memory device coupled to the at least on electronic processor and having instructions stored therein;
and wherein the at least one electronic processor is configured to access the at least one memory device and execute the instructions thereon to cause the drive torque to be controlled in accordance with the selected relationship between torque and speed.

Optionally the speed of the vehicle may be controlled by accelerating the vehicle from stationary to the target speed.

Optionally the control system may be further configured to maintain the target vehicle speed once said target vehicle speed is reached.

Optionally the terrain on which the vehicle is driving may be determined in dependence on a manual selection of a terrain mode by the vehicle driver/operator or on an automatic determination of the terrain based on inputs from one of more vehicle sensors.

Optionally the selected relationship between torque and speed is dependent on an intended direction of travel of the vehicle and/or a current direction of travel of the vehicle.

Optionally the selected relationship between torque and speed is dependent on a terrain gradient.

Optionally the control system may be further configured to determine the target vehicle speed based on the selected relationship between torque and speed.

Optionally the control may be further configured to:
receive a torque demand from a user;
provide control of drive torque to the user, such that the vehicle is not operating in the creep control mode.

Optionally the control system may be further configured to provide control of drive torque to the user when the torque demand from the user exceeds the selected relationship between torque and speed.

Optionally the creep control mode may be reinstated when the vehicle speed passes below the target speed and the driver demand falls below the selected relationship between torque and speed.

Optionally the control system may be further configured to control a torque applied to each wheel or each axle of the vehicle based on the selected relationship between torque and speed.

Optionally the control system may be further configured to implement the selected relationship between torque and speed by applying a braking torque opposing drive torque from the prime mover, such as an internal combustion engine and/or traction motor. This is beneficial where a low friction surface is present, and the creep torque provided without braking may exceed the available friction. This could polish the surface and make restarting even more difficult.

Optionally the braking torque may be provided by the traction motor opposing drive torque from the internal combustion engine.

Optionally the control system may be configured to receive a creep control indication from the user for operating in the creep control mode.

Optionally the vehicle is an electric vehicle, a hybrid vehicle or a range-extended electric vehicle.

According to another aspect of the invention, there is provided a vehicle comprising the control system described above.

According to another aspect of the invention, there is provided a method comprising:
determining a terrain mode of the vehicle;
selecting a relationship between torque and speed based, at least in part, on the terrain mode;
when the vehicle is operating in a creep control mode, controlling a drive torque of the vehicle in accordance with the selected relationship between torque and speed;
controlling the speed of the vehicle to a target speed while maintaining drive torque at or below the selected relationship between torque and speed.

Optionally, determining a terrain mode of the vehicle may comprise determining which of a plurality of terrain modes is selected by a driver of the vehicle. By way of example, the plurality of terrain modes may include modes for driving on one or more of grass, gravel, snow, mud, sand or rocks. Alternatively, or in addition, determining the terrain mode of the vehicle may comprise automatically determining a terrain on which the vehicle is operating based on inputs from one or more vehicle sensors.

According to another aspect of the invention, there is provided a non-transitory computer readable medium comprising computer readable instructions that, when executed by a processor, cause performance of the method above.

The term "creep" is well understood in the art and, throughout this disclosure, the term "creep control mode" is intended to refer to a mode in which the vehicle is operating at creep speed. In general, this may correspond to a so-called "all hands off" driving or operating mode in which neither the driver/operator nor an automated driving system, such as a cruise control system or the like, supplies a torque demand to the prime mover. In a vehicle having an ICE as the prime mover, for example, creep control mode may correspond to the engine operating at idle speed, with no application of the accelerator pedal by the driver and all automated driving systems being deactivated. In an electric vehicle, in which the prime mover comprises one or more electric motors, creep control mode may correspond to a mode in which the or each motor is controlled to simulate the operation of an automatic transmission having a torque converter so as to drive the vehicle at the creep speed.

### BRIEF DESCRIPTION OF THE DRAWINGS

One or more embodiments of the invention will now be described, by way of example only, with reference to the accompanying drawings, in which:
In an embodiment of the invention;
Figure 1 shows a schematic illustration of a vehicle suitable for use with an embodiment of the invention in a side view;
Figure 2 shows a powertrain arrangement suitable for use with an embodiment of the invention;
Figure 3 shows a control system suitable for use with an embodiment of the invention;
Figure 4 shows a graph of road speed vs. torque according to an embodiment of the invention;
Figure 5 shows a graph of road speed vs. torque for several terrain modes according to an embodiment of the invention;
Figure 6 shows an example state diagram for controlling the control system according to an embodiment such as that shown in figure 3.

### DETAILED DESCRIPTION

A control system for a vehicle in accordance with an embodiment of the present invention is described herein with reference to the accompanying figures.

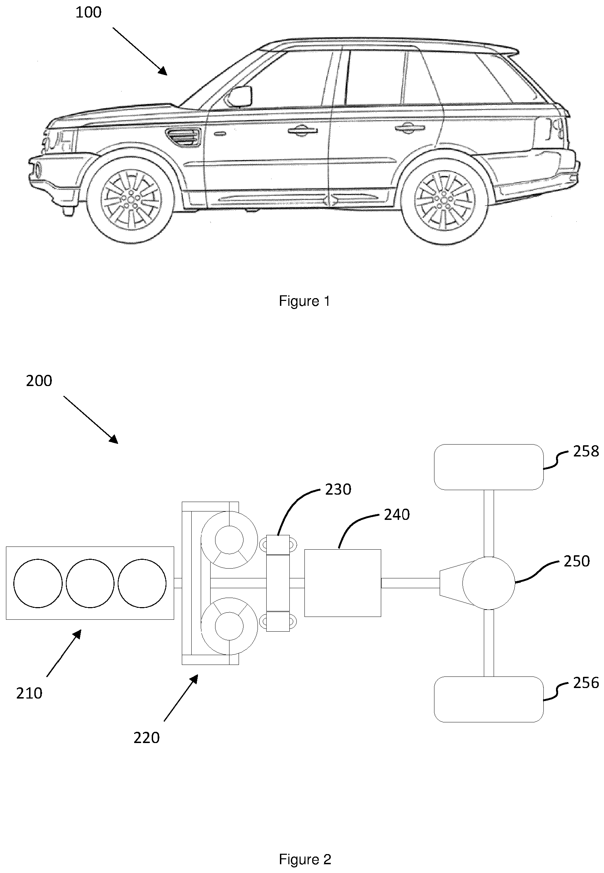

Figure 1 shows a vehicle 100 according to an embodiment of the present invention. The vehicle 100 may be two-wheel drive or four-wheel drive and includes an automatic transmission. The vehicle may be a hybrid vehicle including an internal combustion engine (ICE) and an electric traction motor. Alternatively, the vehicle may be an electric vehicle, or it may include an ICE with no electric traction motor.

Figure 2 shows a powertrain 200 suitable for use with an embodiment of the present invention. The powertrain 200 comprises a prime mover, in the form of an internal combustion engine 210, a torque converter 220, a traction motor 230, a transmission 240, a final drive 250 and driving wheels 256 and 258. The engine 210 provides torque to drive the torque converter 220 by means of flex plate. Drive passes from the flex plate to the torque converter impeller and the torque converter provides hydrodynamic drive to the turbine, drive then leaves the torque converter through the transmission input shaft into the transmission 240. The traction motor 230 has a stator and a rotor and the rotor provides torque to the transmission input shaft either to provide drive or braking torque through the transmission. The transmission 240 provides a range of selectable gear ratios and the output from the transmission passes to the prop shaft. The prop shaft drives the final drive 250 which may contain a differential and drives side shafts which themselves drive wheels 256 and 258.

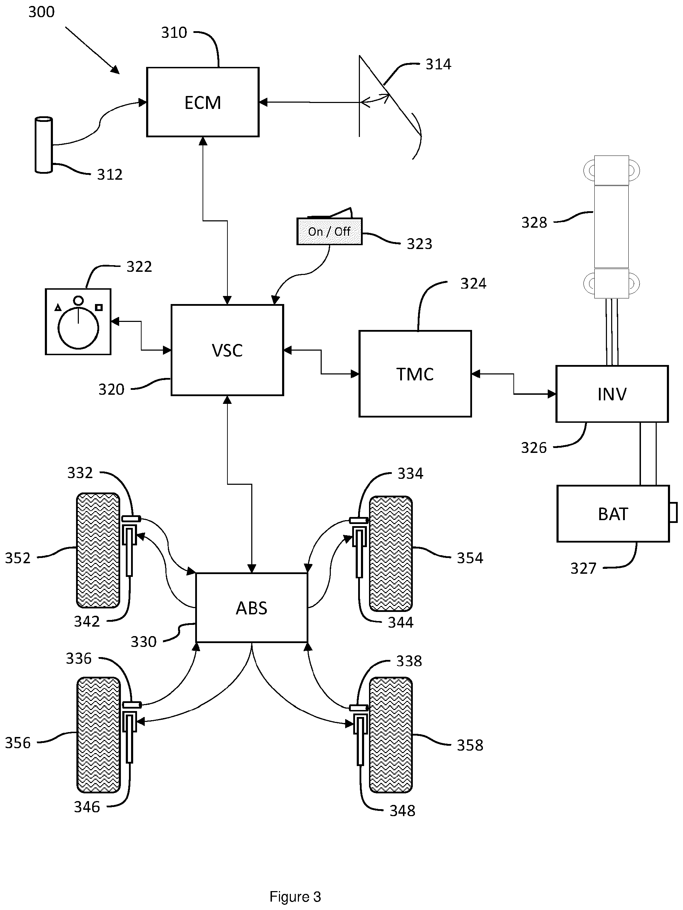

Figure 3 shows a control system 300 suitable for use with an embodiment of the present invention. The control system comprises a plurality of control modules, input signals and controlled outputs. While an embodiment is shown, the functions of individual modules may be combined or distributed across controllers on a network. Similarly, the embodiment shows an arrangement of sensors and controlled outputs, these may be substituted by equivalent signals without departing from the invention. Signals between controllers are also shown in the embodiment and these may be carried by a network such as a controller area network (CAN) linking a plurality of controllers.

The control system 300 comprises an engine control module (ECM) 310 which accepts signals from an accelerator pedal 314 to indicate a driver demand for torque and an engine speed sensor 312. These are used by the controller to determine fuel injection and, in a gasoline engine, the ignition timing. The engine speed and pedal position signals are sent to the vehicle supervisory controller (VSC) 320.

The vehicle supervisory controller (VSC) 320 receives signals from other controllers and from a terrain mode switch 322 which allows the driver to indicate the terrain over which the vehicle is travelling. This switch may have an automatic mode which allows the controller to select an appropriate mode depending on sensor inputs. A creep mode switch 323 also provides an input to the VSC for the driver to select or de-select creep mode, this may be a physical switch or may be provided by a multipurpose input device such as a touch screen. The VSC provides an output to a traction motor controller 324 and the traction motor controller provides control signals to an inverter 326 which controls power flow between a battery 327 and the traction motor 328. The inverter can control the motor to provide drive torque by supplying battery power to the motor or to provide regenerative braking by taking motor power to charge the battery.

In this embodiment an anti-lock braking system (ABS) controller 330 is shown which receives signals from wheel speed sensors 332, 334, 336 and 338. From these signals a vehicle speed is calculated which is sent to the VSC 320. The ABS controller also controls braking of the wheels through brakes 342, 344, 346 and 348 and braking is provided both from a driver input from a brake pedal and on command from the VSC without driver input.

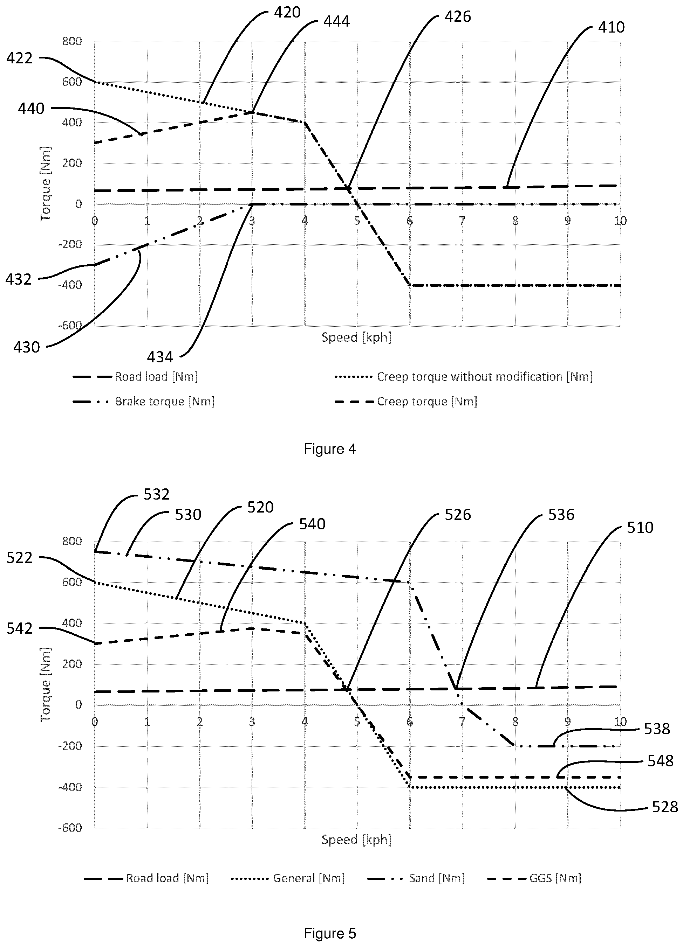

Figure 4 shows a graph of torque [Nm] vs. speed [kph] according to an embodiment of the present invention. Road load is shown in line 410 which indicates the torque required to overcome resistance on a level road, it will be appreciated that over the low speeds shown this line is almost straight as aerodynamic resistance has little effect. The road load will also vary when the vehicle is driving over a gradient or when the terrain surface is soft although these effects are not shown. Line 420 shows the creep torque which is generated by the torque converter in a creep control mode of the vehicle. The curve is simplified in this figure. At point 422, representing the vehicle at rest, the torque converter provides a creep torque of 600Nm. This torque causes the vehicle to accelerate. At point 426 the torque converter torque curve crosses the road load curve and so at this point the drive torque balances the resistance, such that the vehicle no longer accelerates. The vehicle speed at this point is known as the creep speed. Conveniently the slope of the torque converter curve is steep across the intersection 426 so small changes in road resistance have little effect on the creep speed.

Line 430 shows a braking torque which may be applied by the friction brakes or by the traction motor (where provided) during creep control mode. This provides 300 Nm of braking (negative torque) at rest (point 432) ramping to 0 Nm at 3 kph (point 434). Line 440 shows the combination of lines 420 and 430 and is the net creep torque experienced by the vehicle. The net creep torque at rest is 300 Nm ramping up to 425 Nm at 3 kph (point 444) then following curve 420 to achieve the same creep speed of 4.8 kph. This modification allows a gentler acceleration from rest when the driver releases the brake pedal which is appropriate for a terrain surface which has a low coefficient of friction. Advantageously this open loop control method can prevent wheel slip which is known to polish a surface and thereby further reduce the available friction. While this embodiment shows an ICE with a torque converter, it will be appreciated that an electric drive system may be able to provide the same output line 440 without the need for braking torque, since the traction motor controller and inverter can control the electric motor to generate substantially any desired drive torque from zero.

During engine warmup the ICE may be controlled to a higher engine speed which would affect the creep speed. This invention would allow regenerative braking to control the creep torque relationship produced to maintain a consistent creep speed despite an elevated idle speed.

Figure 5 shows a graph of torque [Nm] vs. speed [kph] according to an embodiment of the present invention. Road load is shown in line 510 which indicates the torque required to overcome resistance on a level road as described above. Lines 520, 530 and 540 show net creep torque for different terrain modes although the number of modes and the curves are simplified for clarity. It is known that some vehicles include a system in which a driver can select one of a plurality of modes suitable for driving on respective surfaces or terrains. In other vehicles, the system can automatically select a terrain mode by determining the terrain on which the vehicle is driving based on inputs from one or more vehicle sensors. Example terrain modes include grass, gravel, snow, mud, sand and rocks. Some terrain modes may be suitable for driving on more than one terrain.

Line 520 shows the creep torque for a "general" terrain mode and this may be the unmodified torque converter characteristic at idle.

Line 530 shows the creep torque for a sand terrain mode which has several features which differ from the general mode. At rest, the creep torque has increased from 600 Nm (point 522) to 775 Nm (point 532) in order to overcome the higher surface friction due to the soft sand terrain. The creep speed has also increased from 4.8 kph (point 526) to 6.9 kph (point 536). Although the higher surface resistance of sand is not shown, this creep speed may be 6.5 kph if the surface resistance were 300 Nm. A higher creep speed is possible because travelling on sand rarely requires tight manoeuvring and it makes acceleration from the creep speed more convenient as the wheels are less likely to dig into the surface from the higher creep speed. The additional torque required to achieve curve 530 may be provided by the traction motor using battery power or by increasing the engine idle speed. In some instances, both may be applied to achieve the desired curve. The VSC may provide control signals to the ECM, TMC and ABS to achieve the most efficient method of providing the required torque. This may depend on the state of charge of the battery and the driveline configuration. At speeds above 7 kph the curve 530 provides a lower overrun torque 538 than the general curve 520. This is again due to the higher surface resistance of sand, so the desired vehicle deceleration does not require as much overrun torque. This modification may be provided by the traction motor as before.

Line 540 shows the creep torque for a grass, gravel & snow (GGS) terrain mode. Grass, gravel and snow generally have a lower surface friction coefficient than sand and thus in this case the creep torque at rest is lower than the general mode at point 542 to provide a gentle pull away from rest without wheel spin. The torque then approaches the general curve and achieves the same creep speed at point 526. The curve may alternatively be calibrated to achieve a lower creep speed because it may be advantageous to manoeuvre more slowly on an icy surface. In this case the negative torque required to achieve curve 540 (i.e. a reduced net drive torque compared to the general curve 520) may be provided by the traction motor using battery power, by application of the brakes or by decreasing the engine idle speed. The VSC may provide control signals to the ECM, TMC and ABS to achieve the most efficient method of providing the required torque.

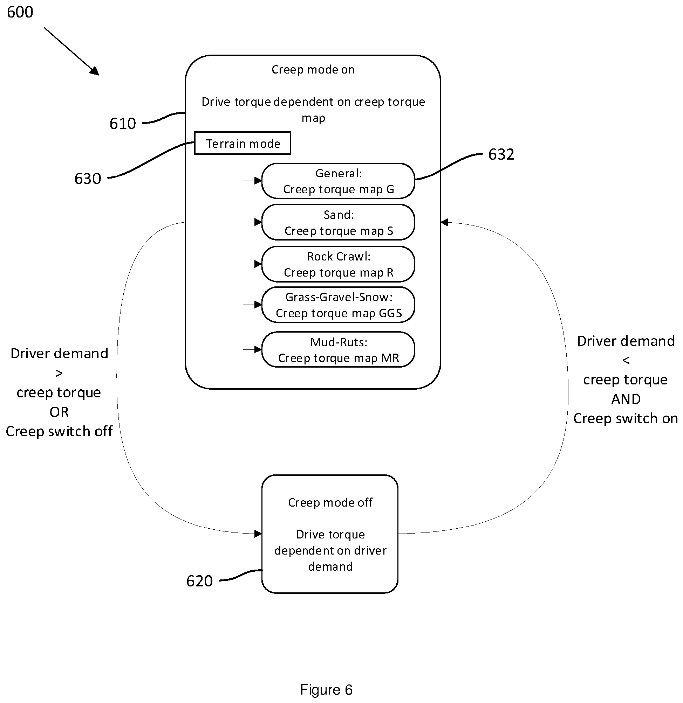

Figure 6 shows a state diagram 600 for controlling the control system according to an embodiment of the present invention. Two states are shown: creep control mode on 610 and creep control mode off 620. The transition from creep mode off to creep mode on may require that the driver demand, either from an accelerator pedal input or from an automated vehicle control system such as a cruise control setting, is less than the creep torque. This means that creep mode will engage when the driver releases the accelerator at low speeds. Additionally, the creep mode may only transition from off to on when the creep mode switch is on and this allows the driver to select whether creep is required. The transition from creep mode on to off may require the driver demand to be greater than the creep torque or for the creep switch to be off. This allows the driver to accelerate from creep by pressing the accelerator to demand a higher torque or by switching off creep.

When the creep mode is off 620 the drive torque depends on driver demand. When creep torque is on the drive torque depends on the selected creep torque map which, as explained above, may depend on the determined terrain mode. Within the creep mode on state the selection of creep torque maps is made according to the terrain mode 630 from a range of maps shown 632.

It will be appreciated that various changes and modifications can be made to the present invention without departing from the scope of the present invention as defined by the appended claims.

## Claims

1. A control system (300) for a vehicle (100), the control system (300) comprising one or more controllers, the control system (300) configured to:
determine a terrain mode of the vehicle (100);
select a relationship between torque and speed based, at least in part, on the terrain mode; and
when the vehicle (100) is operating in a creep control mode (610), control a drive torque of the vehicle (100) in accordance with the selected relationship between torque and speed,
wherein the speed of the vehicle (100) is controlled to a target speed while maintaining drive torque at or below the selected relationship between torque and speed.

2. A control system (300) according to claim 1, wherein the speed of the vehicle (100) is controlled by accelerating the vehicle (100) from stationary to the target speed.

3. A control system (300) according to any one of claims 1 to 2, further configured to maintain the target vehicle speed once said target vehicle speed is reached.

4. A control system (300) according to any one of the preceding claims, wherein the terrain mode is dependent on a determined vehicle terrain based on a manual selection or an automatic selection.

5. A control system (300) according to any one of the preceding claims, wherein the selected relationship between torque and speed is dependent on an intended direction of travel of the vehicle (100) and/or a current direction of travel of the vehicle (100).

6. A control system (300) according to any one of the preceding claims, wherein the selected relationship between torque and speed is dependent on a terrain gradient.

7. A control system (300) according to any one of the preceding claims, further configured to determine the target vehicle speed based on the selected relationship between torque and speed.

8. A control system (300) according to any one of the preceding claims, further configured to receive a torque demand from a user and provide control of drive torque to the user, such that the vehicle (100) is not operating in the creep control mode (620); optionally the control system (300) is further configured to provide control of drive torque to the user when the torque demand from the user exceeds the selected relationship between torque and speed.

9. A control system (300) according to claim 8, further configured to reinstate the creep control mode (610) when the vehicle speed passes below the target speed and the driver demand falls below the selected relationship between torque and speed.

10. A control system (300) according to any one of the preceding claims, further configured to control a torque applied to each wheel (256, 258) or each axle of the vehicle (100) based on the selected relationship between torque and speed.

11. A control system (300) according to any one of the preceding claims, further configured to implement the selected relationship between torque and speed by applying a braking torque opposing drive torque from an internal combustion engine (210) and/or traction motor (230); optionally wherein the braking torque is provided by the traction motor (230) opposing drive torque from the internal combustion engine (210).

12. A control system (300) according to any one of the preceding claims, further configured to receive a creep control indication from the user for operating in the creep control mode (610).

13. A method comprising:
determining a terrain mode of the vehicle (100);
selecting a relationship between torque and speed based, at least in part, on the terrain mode;
when the vehicle (100) is operating in a creep control mode (610), controlling a drive torque of the vehicle (100) in accordance with the selected relationship between torque and speed; and
controlling the speed of the vehicle (100) to a target speed while maintaining drive torque at or below the selected relationship between torque and speed.

14. A vehicle (100) comprising a control system (300) according to any one of claims 1 to 12.

15. A non-transitory computer readable medium comprising computer readable instructions that, when executed by a processor, cause performance of the method of claim 13.

## Patentansprüche

1. Steuersystem (300) für ein Fahrzeug (100), das Steuersystem (300) umfassend eine oder mehrere Steuerungen, wobei das Steuersystem (300) konfiguriert ist zum:
Bestimmen eines Geländemodus des Fahrzeugs (100);
Auswählen eines Verhältnisses zwischen Drehmoment und Geschwindigkeit, das mindestens teilweise auf dem Geländemodus basiert; und
wenn das Fahrzeug (100) in einem Kriechsteuermodus (610) betrieben wird, Steuern eines Antriebsdrehmoments des Fahrzeugs (100) gemäß dem ausgewählten Verhältnis zwischen Drehmoment und Geschwindigkeit,
wobei die Geschwindigkeit des Fahrzeugs (100) auf eine Zielgeschwindigkeit gesteuert wird, während das Antriebsdrehmoment auf oder unter dem ausgewählten Verhältnis zwischen Drehmoment und Geschwindigkeit gehalten wird.

2. Steuersystem (300) nach Anspruch 1, wobei die Geschwindigkeit des Fahrzeugs (100) durch Beschleunigen des Fahrzeugs (100) aus dem Stand auf die Zielgeschwindigkeit gesteuert wird.

3. Steuersystem (300) nach einem der Ansprüche 1 bis 2, das ferner konfiguriert ist, um die Zielfahrzeuggeschwindigkeit zu halten, sobald die Zielfahrzeuggeschwindigkeit erreicht ist.

4. Steuersystem (300) nach einem der vorstehenden Ansprüche, wobei der Geländemodus von einem bestimmten Fahrzeuggelände abhängig ist, basierend auf einer manuellen Auswahl oder einer automatischen Auswahl.

5. Steuersystem (300) nach einem der vorstehenden Ansprüche, wobei das ausgewählte Verhältnis zwischen Drehmoment und Geschwindigkeit von einer beabsichtigten Fahrtrichtung des Fahrzeugs (100) und/oder einer aktuellen Fahrtrichtung des Fahrzeugs (100) abhängt.

6. Steuersystem (300) nach einem der vorstehenden Ansprüche, wobei das ausgewählte Verhältnis zwischen Drehmoment und Geschwindigkeit von einer Geländeneigung abhängt.

7. Steuersystem (300) nach einem der vorstehenden Ansprüche, das ferner konfiguriert ist, um die Zielgeschwindigkeit des Fahrzeugs basierend auf dem ausgewählten Verhältnis zwischen Drehmoment und Geschwindigkeit zu bestimmen.

8. Steuersystem (300) nach einem der vorstehenden Ansprüche, das ferner konfiguriert ist, um eine Drehmomentanforderung von einem Benutzer zu empfangen und dem Benutzer die Steuerung des Antriebsdrehmoments bereitzustellen, derart, dass das Fahrzeug (100) nicht in dem Kriechsteuermodus (620) betrieben wird; optional das Steuersystem (300) ferner konfiguriert ist, um die Steuerung des Antriebsdrehmoments dem Benutzer bereitzustellen, wenn die Drehmomentanforderung des Benutzers das ausgewählte Verhältnis zwischen Drehmoment und Geschwindigkeit überschreitet.

9. Steuersystem (300) nach Anspruch 8, das ferner konfiguriert ist, um den Kriechsteuermodus (610) wiederherzustellen, wenn die Fahrzeuggeschwindigkeit unter die Zielgeschwindigkeit fällt und die Fahreranforderung unter das ausgewählte Verhältnis zwischen Drehmoment und Geschwindigkeit fällt.

10. Steuersystem (300) nach einem der vorstehenden Ansprüche, das ferner konfiguriert ist, um ein auf jedes Rad (256, 258) oder jede Achse des Fahrzeugs (100) ausgeübtes Drehmoment basierend auf dem ausgewählten Verhältnis zwischen Drehmoment und Geschwindigkeit zu steuern.

11. Steuersystem (300) nach einem der vorstehenden Ansprüche, das ferner konfiguriert ist, um das ausgewählte Verhältnis zwischen Drehmoment und Geschwindigkeit durch Anlegen eines Bremsdrehmoments zu implementieren, das dem Antriebsdrehmoment von einem Verbrennungsmotor (210) und/oder einem Traktionsmotor (230) entgegenwirkt; wobei optional das Bremsdrehmoment durch den Traktionsmotor (230) bereitgestellt wird, der einem Antriebsdrehmoment des Verbrennungsmotors (210) entgegenwirkt.

12. Steuersystem (300) nach einem der vorstehenden Ansprüche, das ferner konfiguriert ist, um eine Kriechsteuerangabe von dem Benutzer zu empfangen, um in dem Kriechsteuermodus (610) betrieben zu werden.

13. Verfahren, umfassend:
Bestimmen eines Geländemodus des Fahrzeugs (100);
Auswählen eines Verhältnisses zwischen Drehmoment und Geschwindigkeit, das mindestens teilweise auf dem Geländemodus basiert;
wenn das Fahrzeug (100) in einem Kriechsteuermodus (610) betrieben wird, Steuern eines Antriebsdrehmoments des Fahrzeugs (100) gemäß dem ausgewählten Verhältnis zwischen Drehmoment und Geschwindigkeit; und
Steuern der Geschwindigkeit des Fahrzeugs (100) auf eine Zielgeschwindigkeit, während das Antriebsdrehmoment auf oder unter dem ausgewählten Verhältnis zwischen Drehmoment und Geschwindigkeit gehalten wird.

14. Fahrzeug (100), umfassend ein Steuersystem (300) nach einem der Ansprüche 1 bis 12.

15. Nichtflüchtiges, computerlesbares Medium, umfassend computerlesbare Anweisungen, die, wenn sie durch einen Prozessor ausgeführt werden, das Durchführen des Verfahrens nach Anspruch 13 veranlassen.

## Revendications

1. Système de commande (300) pour un véhicule (100), le système de commande (300) comprenant un ou plusieurs dispositifs de commande, le système de commande (300) étant configuré pour :
déterminer un mode de terrain du véhicule (100) ;
sélectionner une relation entre le couple et la vitesse sur la base, au moins en partie, du mode de terrain ; et
lorsque le véhicule (100) fonctionne dans un mode de commande de fluage (610), commander un couple d'entraînement du véhicule (100) conformément à la relation sélectionnée entre le couple et la vitesse,
dans lequel la vitesse du véhicule (100) est commandée jusqu'à une vitesse cible tout en maintenant le couple d'entraînement à un niveau inférieur ou égal à la relation sélectionnée entre le couple et la vitesse.

2. Système de commande (300) selon la revendication 1, dans lequel la vitesse du véhicule (100) est commandée en accélérant le véhicule (100) de l'arrêt à la vitesse cible.

3. Système de commande (300) selon l'une quelconque des revendications 1 à 2, configuré en outre pour maintenir la vitesse cible du véhicule une fois que ladite vitesse cible du véhicule est atteinte.

4. Système de commande (300) selon l'une quelconque des revendications précédentes, dans lequel le mode de terrain dépend d'un terrain de véhicule déterminé sur la base d'une sélection manuelle ou d'une sélection automatique.

5. Système de commande (300) selon l'une quelconque des revendications précédentes, dans lequel la relation sélectionnée entre le couple et la vitesse dépend d'une direction de déplacement prévue du véhicule (100) et/ou d'une direction de déplacement actuelle du véhicule (100).

6. Système de commande (300) selon l'une quelconque des revendications précédentes, dans lequel la relation sélectionnée entre le couple et la vitesse dépend de la pente du terrain.

7. Système de commande (300) selon l'une quelconque des revendications précédentes, configuré en outre pour déterminer la vitesse cible du véhicule sur la base de la relation sélectionnée entre le couple et la vitesse.

8. Système de commande (300) selon l'une quelconque des revendications précédentes, configuré en outre pour recevoir une demande de couple provenant d'un utilisateur et fournir une commande de couple d'entraînement à l'utilisateur, de telle sorte que le véhicule (100) ne fonctionne pas dans le mode de commande de fluage (620) ; éventuellement le système de commande (300) est en outre configuré pour fournir à l'utilisateur une commande du couple d'entraînement lorsque la demande de couple provenant de l'utilisateur dépasse la relation sélectionnée entre le couple et la vitesse.

9. Système de commande (300) selon la revendication 8, configuré en outre pour rétablir le mode de commande de fluage (610) lorsque la vitesse du véhicule passe en dessous de la vitesse cible et que la demande du conducteur tombe en dessous de la relation sélectionnée entre le couple et la vitesse.

10. Système de commande (300) selon l'une quelconque des revendications précédentes, configuré en outre pour commander un couple appliqué à chaque roue (256, 258) ou à chaque essieu du véhicule (100) sur la base de la relation sélectionnée entre le couple et la vitesse.

11. Système de commande (300) selon l'une quelconque des revendications précédentes, configuré en outre pour mettre en œuvre la relation sélectionnée entre le couple et la vitesse en appliquant un couple de freinage s'opposant au couple d'entraînement à partir d'un moteur à combustion interne (210) et/ou d'un moteur de traction (230) ; éventuellement, dans lequel le couple de freinage est fourni par le moteur de traction (230) qui s'oppose au couple d'entraînement du moteur à combustion interne (210).

12. Système de commande (300) selon l'une quelconque des revendications précédentes, configuré en outre pour recevoir une indication de commande de fluage provenant de l'utilisateur pour fonctionner en mode de commande de fluage (610).

13. Procédé comprenant :
la détermination d'un mode de terrain du véhicule (100) ;
la sélection d'une relation entre le couple et la vitesse sur la base, au moins en partie, du mode de terrain ;
lorsque le véhicule (100) fonctionne dans un mode de commande de fluage (610), la commande d'un couple d'entraînement du véhicule (100) conformément à la relation sélectionnée entre le couple et la vitesse ; et
la commande de la vitesse du véhicule (100) jusqu'à une vitesse cible tout en maintenant le couple d'entraînement à un niveau inférieur ou égal à la relation sélectionnée entre le couple et la vitesse.

14. Véhicule (100) comprenant un système de commande (300) selon l'une quelconque des revendications 1 à 12.

15. Support non transitoire lisible par ordinateur comprenant des instructions lisibles par ordinateur qui, lorsqu'elles sont exécutées par un processeur, amènent la réalisation du procédé selon la revendication 13.
